# EUROPEAN PATENT SPECIFICATION

(11) **EP 0 591 257 B1**
(45) Date of publication and mention of the grant of the patent: **21.08.1996**
(21) Application number: 92911480.9
(22) Date of filing: 10.06.1992
(51) Int. Cl.: G01K 13/08, G01K 3/06, G01J 5/00

(54) **APPARATUS FOR TEMPERATURE DETECTION**
Vorrichtung zur Temperaturdetektion
APPAREIL DE DETECTION DE TEMPERATURE

(30) Priority: 28.06.1991 GB 91139667
(43) Date of publication of application: 13.04.1994
(73) Proprietor: FERODO LIMITED, Stockport, Cheshire SK12 6JP (GB)
(72) Inventor: WOODWARD, Andrew John, Rugby, Warwickshire CV21 2QW (GB)
(74) Representative: Drury, Peter Lawrence
(86) International application number: GB9201038
(87) International publication number: WO9300578

(56) References cited:
- EP-A- 0 041 178
- EP-A- 0 119 724
- PATENT ABSTRACTS OF JAPAN vol. 13, no. 214 (M-827)18 May 1989 & JP-A-1 033 419

## Description

This invention is concerned with apparatus for temperature detection and, in particular, with apparatus for use in detecting variations in temperature around a circular path on a rotating surface such an apparatus is known from EP-A-0 041 178. The need for such an apparatus arises, for example, in the design of disc brakes where the material of the brake pads has to be selected so that it will not excessively damage the discs. The circular path may be on the drum of a drum brake or on the wheel itself, e.g. in a block type brake, or on cheek-plates, e.g. of a railway wheels which are used instead of a disc.

It is known that the discs of disc brakes are subject in use to so-called "hot spots", i.e. areas which have a higher temperature than other areas of the disc even those situated at the same radial distance from the centre of the disc. Hot spots also occur in the other types of brake mentioned above. In order to correctly select the material of the brake pads, it is necessary to detect the location of and temperature of these hot spots.

It is, of course, well-known to detect the temperature of a body by using a radiation pyrometer. Such a pyrometer produces an output which is proportional to the intensity of radiation falling on the pyrometer in a restricted range of wavelength to which the pyrometer is sensitive. Since the intensity of radiation emitted by a body is a function of its absolute temperature, the output of the pyrometer gives a good indication of the body's temperature.

It is, therefore, possible to arrange that radiation from an area of a path is transmitted to a pyrometer and that the output of the pyrometer is sampled as the area changes as the surface rotates. In this way, it is possible to collect temperature data from points along a circular path on the surface of, for example, a disc so that hot spots can be detected. However, it is found in practice that when successive data samples are taken the effects on the intensity of the radiation received by the pyrometer of dust and dirt and of variations in the emissivity of the surface during a braking cycle causes sufficient inaccuracy as to render the data samples not fully comparable.

It is an object of the present invention to provide apparatus of the type referred to above which can detect variations in temperature and whose output is substantially independent of the effects of dust and dirt and variations in emissivity of the surface.

The invention provides apparatus for use in detecting variations in temperature around a circular path on a rotating surface, the apparatus comprising infra-red radiation detecting means, radiation transmitting means arranged to transmit infra-red radiation from an area on said path to the radiation detecting means, angular position detecting means operable to detect the angular position of the surface relative to the axis about which it rotates, and recording means operable to record the signals from the radiation detecting means and the signals from the angular detecting means in relation to one another so that temperature variations around the path can be calculated, characterised in that the infra-red radiation detecting means comprises two detectors which are sensitive to different wavelength ranges, the transmitting means comprises a bundle of optical fibres, a selection of said fibres being arranged to transmit to one of the detectors and the remainder of the fibres being arranged to transmit to the other detector so that a proportion of the radiation collected from said area is transmitted to each of the detectors, and the output of the apparatus is expressed as the ratio of the signals from the detectors.

In an apparatus in accordance with the invention, it is found that the ratio of the signals from the detectors gives a good indication of the temperature of the area of the path and this indication is substantially independent of the effects of dust and dirt and emissivity, since both detectors are substantially equally affected by dust and dirt and emissivity since it is found that emissivity does not vary substantially with wavelength. The use of the same bundle of optical fibres to transmit to both detectors minimises the possibility of dust or dirt affecting the output of the apparatus since both detectors are "seeing" the same area of the path. There may, for example, be 50 fibres, 25 randomly selected transmitting to each detector.

The detectors used in an apparatus according to the invention are, preferably, sensitive in neighbouring wavelength ranges. The wavelength ranges can overlap but must not be identical. Suitable detector materials are Indium Arsenide, Germanium, and Silicon.

Where it is desired to investigate a larger surface for hot spots, an apparatus in accordance with the invention may comprise at least one further radiation transmitting means and at least one further set of two detectors, the further radiation transmitting means being arranged to transmit infra-red radiation to said further set of detectors from an area on a different circular path on the rotating surface.

There now follows a detailed description, to be read with reference to the accompanying drawings, of an apparatus for use in detecting variations in temperature around a circular path on a rotating surface, the apparatus being illustrative of the invention.

In the drawings:
Figure 1 is a diagrammatic view of the illustrative apparatus;
Figure 2 is an enlarged view of a portion of Figure 1;
Figure 3 is a graphical representation of the output of two detectors of the illustrative apparatus; and
Figure 4 is a graphical representation of the ratio of the outputs illustrated in Figure 3.

The illustrative apparatus is for use in detecting variations around a circular path on the surface of a rotating disc 10 of a disc brake. The disc 10 is mounted on a shaft 12 for rotation about a central longitudinal axis 14 of the shaft 12. The circular path is centred on the axis 14.

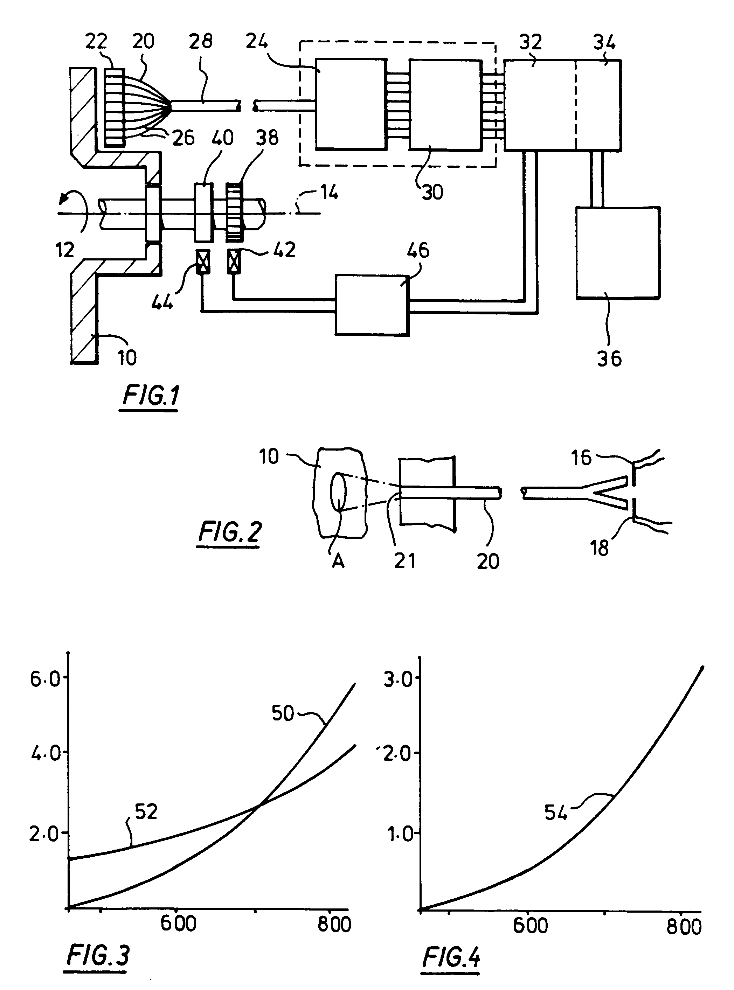

The illustrative apparatus comprises infra-red radiation detecting means which comprises two detectors 16 and 18 (Figure 2) which are sensitive to different but neighbouring wavelength ranges. The detector 16, in this case, is a Germanium pyrometer and the detector 18 is an Indium Arsenide pyrometer.

The illustrative apparatus also comprises radiation transmitting means in the form of a bundle of optical fibres 20 which is arranged to transmit infra-red radiation from an area A on said circular path to the detectors 16 and 18, the area A representing an arc of approximately 6 degrees of the circular path. The bundle 20 consists of 50 individual fibres which each has one of its ends supported adjacent to the area A by a support 22. The ends of the fibres supported by the support 22 are arranged on a circular area 21 facing the area A of the disc 10 and each fibre receives infra-red radiation emitted by the area A. It should be noted that the portion of the disc 10 which occupies the area A is constantly changing as the disc 10 rotates. The bundle 20 is split adjacent to the detectors 16 and 18, which are housed in a detector array 24, so that 25 of the fibres lead to each detector 16 and 18, the fibres leading to each detector 16 and 18 being randomly selected from across the area 21. Thus, a proportion (i.e. half) of the radiation collected by the bundle 20 from said area A is transmitted to each of the detectors 16 and 18. It is not, however, necessary that the proportion should be half.

The support 22 also supports further bundles of optical fibres 26 which provide further radiation transmitting means arranged to transmit infra-red radiation from areas on different circular paths of the surface of the disc 10 to further sets of detectors (not shown) in the detector array 24. Each set of detectors has two detectors, one identical to the detector 16 and one identical to the detector 18. The bundles 20 and 26 pass through a protective conduit 28 to the array 24. The signals from the detectors in the array 24 are amplified by an amplifier 30 and passed to a high speed analogue to digital converter 32 and thence to a RAM memory 34. A computer 36 processes the data stored in the memory 34.

The illustrative apparatus also comprises angular position detecting means operable to detect the angular position of the disc 10 relative to the axis 14. The angular position detecting means comprises two toothed wheels 38 and 40 mounted on the shaft 12 for rotation therewith, two proximity detectors 42 and 44, and a pulse shaper 46. The detector 42 is arranged to detect the teeth of the wheel 38 which has 60 equally-spaced teeth so that the position of the disc 10 about the axis 14 is detected in 6 degree increments. The wheel 40 has a single tooth which is detected by the detector 44 to provide a setting pulse. The signals from the detectors 42 and 44 are shaped by the shaper 46 and passed to the memory 34 via the converter 32. The memory 34, therefore, provides recording means of the illustrative apparatus operable to record the signals from the detectors 16, 18, 42 and 44 in relation to one another so that the temperature variations around the circular path on the surface of the disc 10 can be calculated. The outputs of the detectors 16 and 18 are recorded every time the detector 42 detects a pulse, i.e. every 6 degrees of rotation of the disc 10 and, as the area A represents approximately 6 degrees of arc, the temperatures over the whole circular path are detected.

Figure 3 shows the output of the detectors 16 and 18 in volts (y-axis) plotted against the temperature of the area A in degrees Centigrade. The curve 50 represents the output of the detector 16 and the curve 52 that of the detector 18. Both the curves 50 and 52 are, however, subject to being depressed towards the x-axis by the effects of dust and dirt and emissivity which would, if the curve 50 or the curve 52 were used solely to indicate the temperature, depress the temperature value detected. For this reason, the output of the apparatus is calculated by the computer 36 as the ratio of the signals from the detectors 16 and 18. This output is illustrated by the curve 54 shown in Figure 4 which plots the value of the curve 50 divided by the curve 52 (y-axis) against the temperature of the area A. It will be observed that a well-defined curve is obtained. The curve 54 is substantially independent of the effects of dust and dirt and emissivity.

## Claims

1. Apparatus for use in detecting variations in temperature around a circular path on a rotating surface (10), the apparatus comprising infra-red radiation detecting means (16,18), radiation transmitting means (20) arranged to transmit infra-red radiation from an area on said path to the radiation detecting means, angular position detecting means (38,42) operable to detect the angular position of the surface relative to the axis (14) about which it rotates, and recording means (34) operable to record the signals from the radiation detecting means and the signals from the angular detecting means in relation to one another so that temperature variations around the path can be calculated, characterised in that the infra-red radiation detecting means comprises two detectors (16,18) which are sensitive to different wavelength ranges, the transmitting means (20) comprises a bundle of optical fibres a selection of said fibres being arranged to transmit to one of the detectors (16,18) and the remainder of the fibres being arranged to transmit to the other detector so that a proportion of the radiation collected from said area is transmitted to each of the detectors, and the output of the apparatus is expressed as the ratio of the signals from the detectors.

2. Apparatus according to Claim 1, characterised in that the detectors (16,18) are sensitive in neighbouring wavelength ranges.

3. Apparatus according to Claim 2, characterised in that at least one of the detectors (16,18) is an Indium Arsenide pyrometer, a Germanium pyrometer or a Silicon pyrometer.

4. Apparatus according to any one of Claims 1 to 3, characterised in that the apparatus comprises at least one further radiation transmitting means (26) and at least one further set of two detectors, the further radiation transmitting means being arranged to transmit infra-red radiation to said further set of detectors from an area on a different circular path on the rotating surface (10).

## Patentansprüche

1. Vorrichtung zur Verwendung bei der Detektion von Temperaturänderungen entlang eines kreisförmigen Weges an einer rotierenden Oberfläche (10), wobei die Vorrichtung eine Infrarotstrahlungs-Detektionseinrichtung (16, 18), eine Strahlungs-Übertragungseinrichtung (20), welche so angeordnet ist, um die Infrarotstrahlung von einem Bereich auf dem Weg zu der Strahlungs-Detekionseinrichtung zu übertragen, eine Winkelpositions-Detektionseinrichtung (38, 42), welche betreibbar ist, um die Winkelposition der Oberfläche relativ zu der Achse (14), um welche sie rotiert, zu detektieren, und eine Aufnahmeeinrichtung (34) umfaßt, welche betreibbar ist, um die Signale von der Strahlungs-Detektionseinrichtung und die Signale von der Winkel-Detektionseinrichtung in Beziehung zueinander aufzunehmen, sodaß Temperaturänderungen entlang dieses Weges berechnet werden können, dadurch gekennzeichnet, daß die Infrarotstrahlungs-Detektionseinrichtung zwei Detektoren (16, 18) umfaßt, welche auf zwei unterschiedliche Wellenlängenbereiche empfindlich sind, daß die Übertragungseinrichtung (20) ein Bündel optischer Fasern umfaßt, wobei eine Auswahl dieser Fasern so angeordnet ist, daß sie zu einem der Detektoren (16, 18) übertragen, und der Rest der Fasern so angeordnet ist, daß sie zu dem anderen Detektor übertragen, sodaß ein Anteil der von dem Bereich gesammelten Strahlung zu jedem der Detektoren übertragen wird, und daß die Ausgabe der Vorrichtung als das Verhältnis der Signale von den Detektoren ausgedrückt ist.

2. Vorrichtung nach Anspruch 1, dadurch gekennzeichnet, daß die Detektoren (16, 18) in benachbarten Wellenlängenbereichen empfindlich sind.

3. Vorrichtung nach Anspruch 2, dadurch gekennzeichnet, daß wenigstens einer der Detektoren (16, 18) ein Indium-Arsenid-Pyrometer, ein Germanium-Pyrometer oder ein Silizium-Pyrometer ist.

4. Vorrichtung nach einem der Ansprüche 1 bis 3, dadurch gekennzeichnet, daß die Vorrichtung wenigstens eine weitere Strahlungs-Übertragungseinrichtung (26) und wenigstens einen weiteren Satz von zwei Detektoren umfaßt, wobei die weitere Strahlungs-Übertragungseinrichtung so angeordnet ist, um Infrarotstrahlung zu dem weiteren Satz von Detektoren von einem Bereich eines unterschiedlichen kreisförmigen Weges auf der rotierenden Fläche (10) zu übertragen.

## Revendications

1. Appareil destiné à être utilisé pour détecter les variations de température sur une trajectoire circulaire sur une surface rotative (10), l'appareil comprenant un moyen de détection de rayonnement infrarouge (16, 18), un moyen de transmission de rayonnement (20) agencé pour transmettre le rayonnement infrarouge d'une zone sur ladite trajectoire au moyen de détection de rayonnement, un moyen de détection de position angulaire (38, 42) adapté à détecter la position angulaire de la surface par rapport à l'axe (14) autour duquel elle tourne, et un moyen d'enregistrement (34) adapté à enregistrer les signaux émis par le moyen de détection de rayonnement et les signaux émis par le moyen de détection de position angulaire les uns par rapport aux autres de manière que les variations de température sur la trajectoire puissent être calculées, caractérisé en ce que le moyen de détection de rayonnement infrarouge comprend deux détecteurs (16, 18) qui sont sensibles à des gammes de longueurs d'ondes différentes, le moyen de transmission (20) comprend un faisceau de fibres optiques, une sélection desdites fibres étant agencée pour la transmission à un des détecteurs (16, 18) et le reste desdites fibres étant agencé pour la transmission à l'autre détecteur de manière qu'une proportion du rayonnement reçu de ladite zone soit transmise à chacun des détecteurs, et la sortie de l'appareil est exprimée en tant que rapport des signaux émis par les détecteurs.

2. Appareil selon la revendication 1, caractérisé en ce que les détecteurs (16, 18) sont sensibles à des gammes de longueurs d'ondes voisines.

3. Appareil selon la revendication 2, caractérisé en ce qu'au moins un des détecteurs (16, 18) est un pyromètre à l'arséniure d'indium, un pyromètre au germanium ou un pyromètre au silicium.

4. Appareil selon l'une quelconque des revendications 1 à 3, caractérisé en ce que l'appareil comprend au moins un moyen de transmission de rayonnement supplémentaire (26) et au moins un autre jeu de deux détecteurs, le moyen de transmission de rayonnement supplémentaire étant agencé pour transmettre le rayonnement infrarouge audit autre jeu de détecteurs depuis une zone sur une trajectoire circulaire différente sur la surface rotative (10).
